# EUROPÄISCHE PATENTSCHRIFT

(11) **EP 2 829 852 B1**
(45) Veröffentlichungstag und Bekanntmachung des Hinweises auf die Patenterteilung: **02.01.2019**
(21) Anmeldenummer: 14173776.7
(22) Anmeldetag: 24.06.2014
(51) Int. Cl.: G01F 23/284, G01F 25/00, G01S 13/88, H01Q 1/22, H01Q 3/16, H01Q 3/20, H01Q 15/14, H01Q 17/00

(54) **Radarfüllstandmessgerät mit einer Sicherheitseinrichtung**
Radar fill level measuring device with a safety device
Appareil de mesure du niveau de remplissage par radar équipé d'un dispositif de sécurité

(30) Priorität: 22.07.2013 DE 102013214324
(43) Veröffentlichungstag der Anmeldung: 28.01.2015
(73) Patentinhaber: VEGA Grieshaber KG, 77709 Wolfach (DE)
(72) Erfinder: Kech, Günter, 77709 Wolfach (DE)
(74) Vertreter: Westphal, Mussgnug & Partner Patentanwälte mbB

(56) Entgegenhaltungen:
- EP-A1- 1 751 506
- EP-A1- 2 199 763
- US-B2- 8 009 085

## Beschreibung

Die vorliegende Erfindung betrifft ein Radarfüllstandmessgerät mit einer Sicherheitseinrichtung gemäß dem Oberbegriff des Patentanspruchs 1.

Radarfüllstandmessgeräte mit einer solchen Sicherheitseinrichtung sind aus dem Stand der Technik, beispielsweise aus der US 8, 009, 085 B2 bekannt und weisen einen Signalgenerator zur Erzeugung elektromagnetischer Wellen und eine Antenne zum Abstrahlen der elektromagnetischen Wellen in einen Behälter sowie zum Empfangen reflektierter elektromagnetischer Wellen aus dem Behälter auf, wobei die Sicherheitseinrichtung geeignet ausgebildet ist, eine Funktionsfähigkeit des Radarfüllstandmessgerätes zu überprüfen. Die im Stand der Technik gezeigten Sicherheitseinrichtungen weisen dazu einen Reflektor und eine Verstelleinrichtung auf, die geeignet ausgebildet ist, den Reflektor wenigstens zwischen einer ersten Position, in der er die elektromagnetischen Wellen reflektiert, und einer zweiten Position, in der er die elektromagnetischen Wellen reduziert reflektiert, zu verstellen.

Die aus dem Stand der Technik bekannten Radarfüllstandmessgeräte kommen in der Regel in Behältern, die in der Regel als Tanks oder Silos, die zur Aufbewahrung von verschiedenen Materialien ausgebildet sind, zum Einsatz. In solchen Tanks oder Silos werden beispielsweise Lebensmittel, Getränke, Arzneimittel oder Treibstoffe aufbewahrt, sodass eine berührungslose Füllstandmessung notwendig ist. Als berührungslose Füllstandmesstechniken sind im Stand der Technik beispielsweise die erwähnten Radarfüllstandmessgerät oder alternativ ultraschallbasierte Füllstandmessgeräte bekannt. Aufgrund ihrer hohen Messgenauigkeit sowie der geringen Störanfälligkeit sind Radarfüllstandmessgeräte weit verbreitet.

Die aus dem Stand der Technik bekannten Radarfüllstandmessgeräte werden in der Regel über einen Flansch im oberen Bereich eines Tanks oder Silos montiert, wobei eine Elektronik außerhalb und eine Antenne des Radarfüllstandmessgerätes innerhalb des Gehäuses angeordnet ist. Die Antenne ist geeignet ausgerichtet, elektromagnetische Wellen, das heißt insbesondere ein Radarsignal, in Richtung eines Füllgutes, das innerhalb des Behälters aufbewahrt wird, zu senden und von dem Material reflektierte elektromagnetische Wellen zu empfangen. Aufgrund einer Zeitdifferenz zwischen einem Aussenden des elektromagnetischen Signals und dem Empfangen des reflektierten elektromagnetischen Signals kann dann ein Füllstand innerhalb des Behälters bestimmt werden.

Zur Funktionsüberprüfung des Radarfüllstandmessgerätes, insbesondere zur Überprüfung der Funktionsfähigkeit bei einem sicherheitsrelevanten Maximalfüllstand ist es notwendig, eine Sicherheitseinrichtung vorzusehen, die eine Aussage über die Funktionsfähigkeit bei diesem Maximalfüllstand erlaubt. Aus dem Stand der Technik ist es hierfür bekannt, bei einem Sicherheitstest einen Reflektor manuell in den Strahlengang des Radarfüllstandmessgerätes zu verbringen, um so auch bei einer geringeren Füllung des Behälters die Funktion des Messgerätes bei dem gewünschten Maximalfüllstand zu überprüfen, indem der Reflektor bei diesem Füllstand in den Strahlengang des Radarfüllstandmessgerätes eingebracht und auf diese Weise eine Reflexion bei der Maximalfüllhöhe erzeugt wird.

Bei den aus dem Stand der Technik bekannten Vorrichtungen ist es hierfür notwendig, dass eine Bedienperson den Reflektor manuell in den Strahlengang des Radarfüllstandmessgerätes verbringt und hierfür auf das zu überwachende Behältnis steigt, um den Reflektor zu bedienen. Da typischerweise überwachte Behältnisse häufig Silos oder Tanks mit Höhen von bis zu 35 m sind, stellt dies ein erhebliches Risiko dar. Ferner wird es als nachteilig empfunden, dass für eine Sicherheitsüberprüfung jeder einzelne Behälter aufgesucht und der Reflektor manuell bedient werden muss.

Die EP 219763 A1 beschreibt ein Radarfüllstandmessgerät, das eine Sicherheitseinrichtung mit einem Reflektor und einer Verstelleinrichtung umfaßt. Weiterer Stand der Technik ist in der EP 1751506 A1 und der US 8, 009, 852 B2 beschrieben.

Es ist eine Aufgabe der vorliegenden Erfindung, die aus dem Stand der Technik bekannten Nachteile zu beseitigen und ein weitergebildetes Radarfüllstandmessgerät zur Verfügung zu stellen, das diese Nachteile nicht aufweist.

Diese Aufgabe wird durch ein Radarfüllstandmessgerät mit den Merkmalen des Patentanspruchs 1 gelöst.

Ein erfindungsgemäßes Radarfüllstandmessgerät mit einem Signalgenerator zur Erzeugung elektromagnetischer Wellen und einer Antenne zum Abstrahlen der elektromagnetischen Wellen in einen Behälter sowie zum Empfangen reflektierter elektromagnetischer Wellen aus dem Behälter weist eine Sicherheitseinrichtung zum Überprüfen der Funktionsfähigkeit des Radarfüllstandmessgerätes auf, wobei die Sicherheitseinrichtung einen Reflektor und eine Verstelleinrichtung umfasst, die geeignet ausgebildet ist, den Reflektor wenigstens zwischen einer ersten Position, in der er die elektromagnetischen Wellen reflektiert und einer zweiten Position, in der er die elektromagnetischen Wellen reduziert reflektiert, zu verstellen, wobei die Sicherheitseinrichtung einen Antrieb aufweist, der auf die Verstelleinrichtung wirkt. Erfindungsgemäß ist in der zweiten Position eine Reduktionseinrichtung derart angeordnet, dass der Reflektor in Abstrahlrichtung gesehen wenigstens teilweise verdeckt ist.

Durch eine derartige Reduktionseinrichtung, die beispielsweise als Diffusor und zusätzlich oder alternativ aus einem elektromagnetische Wellen absorbierenden Material ausgebildet sein kann, wird eine zuverlässige Unterscheidung zwischen der Reflexion in der ersten Position und der zweiten Position ermöglicht. Bevorzugterweise ist die Reduktionseinrichtung außerdem so ausgebildet, dass in der zweiten Position keine mit einem Füllstand korrelierte Reflexion stattfindet. Dies kann entweder dadurch erreicht werden, dass die Reduktionseinrichtung durch eine geeignete Oberflächenausgestaltung lediglich ein sehr diffuses Echo erzeugt, das die ausgesendeten elektromagnetischen Strahlen streut oder dadurch, dass alternativ oder zusätzlich durch eine Materialwahl der Reduktionseinrichtung eine derart hohe Dämpfung der Reflexion erzeugt wird, dass diese ebenfalls nicht als zu einem Füllstand korrelierend ermittelt werden kann.

Gemäß der vorliegenden Erfindung wird also ein Antrieb vorgesehen, der auf die Verstelleinrichtung des in dem Behälter angeordneten Reflektors einwirkt, sodass eine automatisierte und fernbedienbare Anordnung geschaffen wird, die ein Aufsuchen jedes einzelnen Behälters und insbesondere ein manuelles Bedienen der Sicherheitseinrichtung überflüssig macht. Es wird auf diese Weise ein erhöhter Bedienkomfort geschaffen und die Arbeitssicherheit bei entsprechenden Sicherheitstests entscheidend verbessert.

Der Antrieb kann beispielsweise mit einer Elektronik des Radarfüllstandmessgerätes verbunden sein und den Reflektor auf Anforderung der Elektronik von der zweiten Position in die erste Position bewegen, sodass ein vollständig automatisierter Vorgang zur Überprüfung der Funktionsfähigkeit des Radarfüllstandmessgerätes, insbesondere im Bereich des Maximalfüllstandes geschaffen werden kann. Es kann auf diese Weise eine regelmäßige Überprüfung der Funktionsfähigkeit im Bereich der sicherheitsrelevanten Füllstände stattfinden, sodass auch eine erhöhte Betriebssicherheit des Radarfüllstandmessgerätes erreicht wird. Auf diese Weise wird es außerdem ermöglicht, die Qualität der vorgenommenen Messungen zu verbessern. Es ist zum Beispiel möglich, dass das Messgerät selbstständig durch Vergleich des von dem Reflektor zurückgeworfenen Signals mit früheren Messwerten auf einen Verschmutzungsgrad der Messeinrichtung schließen kann, um eine Wartung der Anlage einzuleiten oder geänderte Wartungsintervalle zu empfehlen. Bei den Kennwerten kann es sich beispielsweise um zeitliche Werte, Signalamplituden, Signalbreiten oder Verhältniswerte, wie zum Beispiel ein Signal-Rausch-Verhältnis handeln.

In einer alternativen Ausgestaltungsform kann der Antrieb mit einer Bedieneinheit verbunden sein und den Reflektor auf Anforderung der Bedieneinheit von der zweiten Position in die erste Position bewegen.

Diese Ausgestaltungsform stellt eine Zwischenlösung dar, bei der eine erhöhte Arbeitssicherheit geschaffen wird und eine Überprüfung der Funktionsfähigkeit des Radarfüllstandmessgerätes, beispielsweise fernbedient aus einer Messwarte, ausgelöst werden kann.

In einer Ausgestaltungsform der Sicherheitseinrichtung kann diese in der ersten Position federbelastet ausgebildet sein, sodass der Reflektor, angetrieben durch den Antrieb, in die erste Position verbracht und anschließend bei einem Wegfall der Antriebskraft federbelastet in die zweite Position zurückverbracht wird. Es wird auf diese Weise gewährleistet, dass beispielsweise bei einem Ausfall des Antriebs weiterhin eine reguläre Füllstandmessung möglich ist.

Der Antrieb der Sicherheitseinrichtung kann beispielsweise elektrisch, elektromagnetisch oder pneumatisch ausgeführt sein. Diese Aufzählung von verschiedenen Antriebsmöglichkeiten soll lediglich beispielhaft sein und andere Antriebsmöglichkeiten, die sinnvoll erscheinen, nicht ausschließen. Elektrische, elektromagnetische und pneumatische Antriebe sind jedoch sehr gut erprobt und können daher mit geringer Ausfallwahrscheinlichkeit und damit hoher Zuverlässigkeit eingesetzt werden.

In einer bevorzugten Ausgestaltungsform ist der Reflektor in einer zweiten Position in der Reduktionsvorrichtung aufgenommen, das heißt insbesondere vollständig von dieser umschlossen.

Durch ein vollständiges Umschließen des Reflektors mit der Reduktionsvorrichtung kann insbesondere gewährleistet werden, dass der Reflektor an der zweiten Position vor äußeren Einflüssen und insbesondere vor Verschmutzungen und verschmutzungsbedingten Anhaftungen geschützt ist. Auf diese Weise kann eine erhöhte Zuverlässigkeit der Sicherheitseinrichtung und eine verlängerte Betriebsdauer erreicht werden.

Der Antrieb der Sicherheitseinrichtung kann beispielsweise geeignet ausgebildet sein, den Reflektor rotatorisch zu bewegen. Bei einer rotatorischen Bewegung des Reflektors, kann beispielsweise eine kontinuierliche Bewegung erfolgen, bei der der Reflektor in einer Ebene senkrecht zur Abstrahlrichtung rotiert wird und dadurch zwischen der ersten und zweiten Position ein kontinuierlicher Übergang erfolgt.

Der elektromotorische Antrieb kann dazu beispielsweise als Schrittmotor ausgebildet sein.

In einer weiteren Ausgestaltungsform kann der Antrieb auch geeignet ausgebildet sein, den Reflektor linear zu bewegen, wobei der Reflektor dann von der zweiten Position beispielsweise durch eine Schiebebewegung in die erste Position überführt wird.

In einer weiteren Ausgestaltungsform kann der Reflektor in der ersten Position im Wesentlichen senkrecht zur Abstrahlrichtung und in der zweiten Position im Wesentlichen parallel zur Abstrahlrichtung angeordnet sein. Eine derartige Ausgestaltung kann beispielsweise dadurch erreicht werden, dass der Reflektor eine Klappbewegung, das heißt eine Rotation um eine Achse senkrecht zur Abstrahlrichtung durchführt oder mit einem Ansatzstück mit einer 45°-Gehrung an der Verstelleinrichtung angeordnet ist und um diese rotiert.

Sowohl bei einer Klappbewegung als auch bei einer Rotation um eine 45°-Gehrung kann der Reflektor in seiner parallelen Ausrichtung zur Abstrahlrichtung in die Verstelleinrichtung eingezogen werden, sodass er vollständig aus dem Strahlengang der Antenne entfernt ist.

In einer Weiterbildung der Erfindung ist vorgesehen, dass der Reflektor kontinuierlich in den Strahlengang der Antenne hinein und wieder heraus bewegt wird. Eine solche kontinuierliche Bewegung kann entweder auf Anforderung oder permanent erfolgen und sowohl bei rotatorischer als auch bei linearer Bewegung des Reflektors implementiert werden. Bei einer solchen kontinuierlichen Bewegung, bspw. bei einer Rotation in einer Ebene senkrecht zur Abstrahlrichtung der Antenne wird der Reflektor in den Strahlengang eingeschwenkt und wieder herausgeschwenkt. Die Amplitude des von dem Reflektor zu der Antenne zurückgeworfenen Signals wird dabei kontinuierlich größer, bis sie ein Maximum erreicht und nimmt dann wieder kontinuierlich ab.

Auf diese Weise kann beispielsweise eine Veränderung der Amplitude relativ zur Position des Reflektors analysiert und durch Vergleich mit früheren Messungen auf eine momentane Fehlfunktion oder zu einem späteren Zeitpunkt zu erwartende Ausfälle der Messeinrichtung geschlossen werden.
Es ist auch denkbar, dass auf Basis der gemessenen Amplitudenwerte Betriebsparameter der Messeinrichtung verändert werden um zu einem späteren Zeitpunkt Fehlfunktionen zu vermeiden.

Ein korrespondierendes Vorgehen ist auch bei einer linearen Bewegung des Reflektors in einer Ebene senkrecht zur Abstrahlrichtung der Antenne möglich.

Bei einer Schwenkbewegung um eine Achse senkrecht zur Abstrahlrichtung der Antenne wird der Reflektor ausgehend von einer Anordnung im wesentlichen parallel zur Abstrahlrichtung der Antenne in eine Position senkrecht zur Abstrahlrichtung überführt und durchläuft dabei mit einer Reflektorfläche kontinuierlich sämtliche Winkel von 180° bis 90° relativ zur Abstrahlrichtung.

Auf diese Weise kann ebenfalls überprüft werden, ob eine momentane Fehlfunktion vorliegt oder in der Zukunft zu erwarten ist. Auch hier ist es möglich, auf Basis der gemessenen Amplitudenwerte Betriebsparameter der Messeinrichtung zu verändern um zu einem späteren Zeitpunkt Fehlfunktionen zu vermeiden.
Die vorliegende Erfindung wird nachfolgend unter Bezugnahme auf die beigefügten Figuren eingehend erläutert. Es zeigen:
- Figur 1: ein erstes Ausführungsbeispiel eines erfindungsgemäßen Radarfüllstandmessgerätes,
- Figur 2: eine Ausschnittsvergrößerung einer Sicherheitseinrichtung mit einer Reduktionseinrichtung,
- Figur 3: eine zweite Ausschnittsvergrößerung einer nicht erfindungsgemäßen Sicherheitseinrichtung,

- Figur 4: eine dritte Ausschnittsvergrößerung einer nicht erfindungsgemäßen Sicherheitseinrichtung und

- Figur 5: eine Weiterbildung des nicht erfindungsgemäßen Ausführungsbeispiels aus Figur 3.

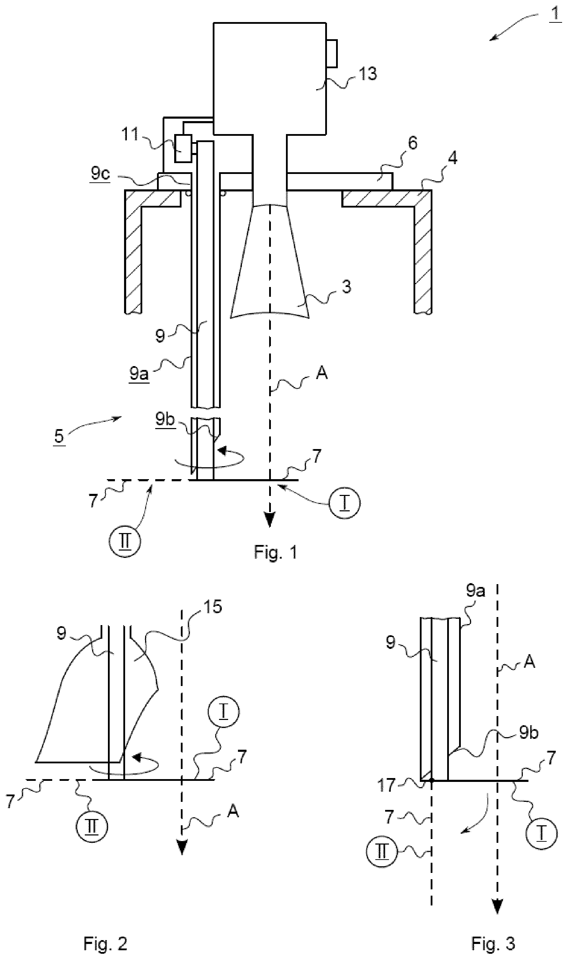

Figur 1 zeigt ein erstes Ausführungsbeispiel eines Radarfüllstandmessgerätes 1 mit einer Sicherheitseinrichtung 5 zur Überprüfung der Funktionsfähigkeit des Radarfüllstandmessgerätes 1 bei einer vorgegebenen Füllhöhe. Das Radarfüllstandmessgerät 1 ist über einen Flansch 6 mit einem Behälter 4 verbunden, wobei eine Elektronik 13 des Radarfüllstandmessgerätes 1 außerhalb und eine Antenne 3 des Radarfüllstandmessgerätes 1 innerhalb des Behälters 4 angeordnet ist. Die Elektronik 13 weist einen Signalgenerator zur Erzeugung elektromagnetischer Wellen im Radarbereich auf, die über die Antenne 3 in Richtung eines in dem Behälter 4 angeordneten Füllgutes abgestrahlt werden. Die von dem Füllgut reflektierten elektromagnetischen Wellen werden zu der Antenne 3 zurückgeworfen, von dieser aufgenommen und über eine Laufzeitermittlung kann eine Bestimmung des Füllstandes in dem Behälter 4 erfolgen.

An dem Flansch 6 ist außerdem eine Sicherheitseinrichtung 5 mit einem in den Strahlengang der Antenne 3 schwenkbaren Reflektor 7 angeordnet, der über eine Verstelleinrichtung 9 mit einer Durchführung 9c zur Fixierung am Flansch 6 betätigbar ist. Die Verstelleinrichtung 9 ist mit einem Antrieb 11 verbunden, der im vorliegenden Ausführungsbeispiel elektromotorisch ausgebildet ist. Die Verstelleinrichtung 9 besteht aus einem Führungsrohr 9a, welches fest mit dem Flansch 6 verbunden ist. Das Führungsrohr 9a kann an der Austrittsöffnung für die Verstelleinrichtung 9 eine Gehrung 9b aufweisen zur Minimierung unerwünschter Reflexionen der Radarstrahlung. Der Antrieb 11 wirkt derart auf die Verstelleinrichtung, dass diese eine Rotation des Reflektors 7 um eine Längsachse der Verstelleinrichtung 9 bewirkt, sodass der Reflektor 7 zwischen einer ersten Position I, in der er im Strahlengang der Antenne 3 angeordnet ist und die elektromagnetischen Wellen reflektiert, und einer zweiten Position II, in der er aus dem Strahlengang der Antenne 3 herausgeschwenkt ist und damit die elektromagnetischen Wellen nicht oder nur reduziert reflektiert, bewegbar ist. Der Reflektor 7 ist zumindest in der ersten Position I in einer Ebene senkrecht zu einer Abstrahlrichtung A der Antenne 3 angeordnet, sodass elektromagnetische Wellen direkt zu der Antenne 3 reflektiert werden. Der Reflektor 7 kann beispielsweise bei einer zu überprüfenden Füllhöhe, insbesondere einer Maximalfüllhöhe, angeordnet sein, sodass eine regelmäßige Überprüfung der Funktionsfähigkeit des Radarfüllstandmessgerätes 1 bei dieser kritischen Füllhöhe erfolgen kann.

Im vorliegenden Ausführungsbeispiel ist der Antrieb 11 mit der Elektronik 13 des Radarfüllstandmessgerätes 1 verbunden und schwenkt den Reflektor 7 auf Anforderung der Elektronik 13 aus der zweiten Position II in die erste Position I, sodass automatisiert eine Funktionsprüfung stattfinden kann.

Eine derartige Funktionsprüfung kann im vorliegenden Ausführungsbeispiel auch manuell, beispielsweise von einer Warte aus, ferngesteuert angestoßen werden oder aber bevorzugt in regelmäßigen Abständen automatisiert erfolgen.

Figur 2 zeigt eine Ausschnittsvergrößerung einer zweiten Ausführungsform einer Sicherheitseinrichtung 5, wie sie in Figur 1 zum Einsatz kommen kann.

In dem in Figur 2 dargestellten Ausführungsbeispiel sind der Reflektor 7 und die Verstelleinrichtung 9 wie in dem Ausführungsbeispiel in Figur 1 derart ausgebildet, dass eine Rotation des Reflektors 7 um eine Achse parallel zur Abstrahlrichtung A der Antenne 3 erfolgt. Zusätzlich zu der Ausgestaltung in Figur 1 ist in dem Ausführungsbeispiel in Figur 2 eine Reduktionseinrichtung 15 vorgesehen, die als Diffusor ausgebildet ist. Die Reduktionseinrichtung 15 ist dafür mit einer Oberfläche ausgebildet, die von der Antenne 3 in Richtung der Reduktionseinrichtung 15 abgestrahlte elektromagnetische Wellen diffus reflektiert, sodass der Reflektor 7 in der zweiten Position II in einem von der Reduktionseinrichtung 15 abgeschatteten Bereich positioniert ist, sodass eine zusätzliche Reduktion der durch den Reflektor 7 hervorgerufenen Reflexionen erfolgt. Die Reduktionseinrichtung 15 kann zusätzlich oder alternativ zu einer diffus reflektierenden Oberfläche außerdem aus einem die elektromagnetischen Wellen absorbierenden Material ausgebildet sein, sodass eine weitere Reduktion der Amplitude auch der diffus reflektierten elektromagnetischen Wellen erfolgt.

In Figur 3 ist ein Ausführungsbeispiel einer Sicherheitseinrichtung 5 dargestellt, das nicht zur vorliegenden Erfindung gehört, wobei der Reflektor 7 in diesem Ausführungsbeispiel um eine Achse 17, die senkrecht zur Abstrahlrichtung A der Antenne 3 verläuft, schwenkbar beziehungsweise klappbar ausgebildet ist. Ein Schwenken beziehungsweise Klappen im Sinne der vorliegenden Anmeldung bedeutet, dass der Reflektor 7 in der ersten Position I im Wesentlichen senkrecht zur Abstrahlrichtung A und in der zweiten Position II im Wesentlichen parallel zu dieser angeordnet ist. Eine Überführung des Reflektors 7 von der ersten Position I in die zweite Position II erfolgt durch ein Schwenken um einen Winkel von etwa 90°, sodass der Reflektor 7 in der zweiten Position II in Verlängerung zu der Verstelleinrichtung 9 angeordnet ist. Dadurch, dass der Reflektor 7 in der zweiten Position II im Wesentlichen parallel zur Abstrahlrichtung A der Antenne 3 angeordnet ist, werden elektromagnetische Wellen von dem Reflektor 7 in der zweiten Position II nicht in Richtung der Antenne 3 zurückreflektiert, sondern in Richtung des Füllgutes abgelenkt und erzeugen eine Reflexion, die zu einem Zeitpunkt von der Antenne 3 detektiert wird, der zu keinem Füllstand korreliert.

In einer Weiterbildung des in Figur 3 dargestellten Ausführungsbeispieles kann der Reflektor 7 zusätzlich zu der Schwenkbewegung auch in die Verstelleinrichtung 9 eingezogen werden, sodass er vollständig von dieser umgeben ist und damit keine Reflexion von elektromagnetischen Wellen erzeugt.

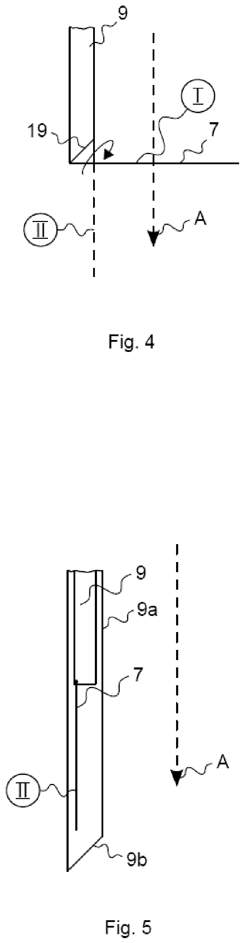

In Figur 4 ist ein Ausführungsbeispiel einer Sicherheitseinrichtung 5 dargestellt, das nicht zur vorliegenden Erfindung gehört, bei dem der Reflektor 7 in der ersten Position I im Wesentlichen senkrecht zur Abstrahlrichtung A der Antenne 3 und in der zweiten Position II im Wesentlichen parallel zu dieser Abstrahlrichtung A ausgerichtet ist. Eine Überführung von der ersten Position I in die zweite Position II erfolgt im vorliegenden Ausführungsbeispiel durch eine Rotation des Reflektors 7, der mit einer 45°-Gehrung 19 an der Verstelleinrichtung 9 befestigt ist. Wie auch im Ausführungsbeispiel gemäß Figur 3 kann der Reflektor 7 dadurch entweder in der ersten Position I in einer Ebene im Wesentlichen senkrecht zur Abstrahlrichtung A der Antenne 3 oder in der zweiten Position II parallel zu dieser angeordnet werden.

Figur 5 zeigt eine nicht erfindungsgemäße Weiterbildung der Ausführungsform aus Figur 3, wobei in Figur 5 der Reflektor 7 in der zweiten Position II dargestellt ist. In der dargestellten Ausführungsform ist der Reflektor 7 im Wesentlichen parallel zu der Abstrahlrichtung A der Antenne 3 ausgerichtet und in das Führungsrohr 9a der Verstelleinrichtung 9 eingezogen. Auf diese Art und Weise werden jegliche Reflexionen an dem Reflektor 7 vermieden und gleichzeitig einer Verschmutzung des Reflektors 7 vorgebeugt.

Es sei an dieser Stelle angemerkt, dass zwischen der ersten Position I und der zweiten Position II ebenfalls eine lineare Bewegung des Reflektors 7 möglich ist.

Bei sämtlichen rotatorischen Bewegungen kann entweder eine kontinuierliche Bewegung des Reflektors 7 erfolgen, sodass eine Überprüfung der Funktionsfähigkeit des Radarfüllstandmessgerätes 1 periodisch jeweils bei Erreichen der ersten Position I erfolgen kann oder eine Bewegung auf regelmäßige oder unregelmäßige Anforderungen der Elektronik 13, die auch manuell durch ein Anforderungssignal, beispielsweise aus einem Messstand, ausgelöst sein kann.

### Bezugszeichenliste

- 1: Radarfüllstandmessgerät
- 3: Antenne
- 4: Behälter
- 5: Sicherheitseinrichtung
- 6: Flansch
- 7: Reflektor
- 9: Verstelleinrichtung
- 9a: Schutzrohr
- 9b: Gehrung
- 9c: Durchführungslager

- 11: Antrieb
- 13: Elektronik
- 15: Reduktionseinrichtung
- 17: Achse
- 19: Gehrung

- A: Abstrahlrichtung
- I: erste Position
- II: zweite Position

## Patentansprüche

1. Radarfüllstandmessgerät (1) mit einem Signalgenerator zur Erzeugung elektromagnetischer Wellen und einer Antenne (3) zum Abstrahlen der elektromagnetischen Wellen in einen Behälter (4) sowie zum Empfangen reflektierter elektromagnetischer Wellen aus dem Behälter (4), mit einer Sicherheitseinrichtung (5) zum Überprüfen der Funktionsfähigkeit oder zum Verbessern der Messqualität des Radarfüllstandmessgeräts (1), wobei
die Sicherheitseinrichtung (5) einen Reflektor (7) und eine Verstelleinrichtung (9) umfasst und geeignet ausgebildet ist, den Reflektor (7) wenigstens zwischen einer ersten Position (I), in der er die elektromagnetischen Wellen reflektiert und einer zweiten Position (II), in der er die elektromagnetischen Wellen reduziert reflektiert, zu verstellen, wobei
die Sicherheitseinrichtung (5) einen Antrieb aufweist, der auf die Verstelleinrichtung (9) wirkt
**dadurch gekennzeichnet, dass**
in der zweiten Position (II) eine Reduktionseinrichtung (15) derart angeordnet ist, dass der Reflektor (7) in Abstrahlrichtung (A) gesehen wenigstens teilweise verdeckt ist.

2. Radarfüllstandmessgerät (1) nach Anspruch 1,
**dadurch gekennzeichnet, dass**
der Antrieb (11) mit einer Elektronik (13) des Radarfüllstandmessgeräts (1) verbunden ist und den Reflektor (7) auf Anforderung der Elektronik (13) von der zweiten Position (II) in die erste Position (I) bewegt.

3. Radarfüllstandmessgerät (1) nach Anspruch 1,
**dadurch gekennzeichnet, dass**
der Antrieb (11) mit einer Bedieneinheit verbunden ist und den Reflektor (7) auf Anforderung der Bedieneinheit von der zweiten Position (II) in die erste Position (I) bewegt.

4. Radarfüllstandmessgerät (1) nach einem der vorhergehenden Ansprüche,
**dadurch gekennzeichnet, dass**
die Sicherheitseinrichtung (5) in der ersten Position (I) federbelastet ausgebildet ist.

5. Radarfüllstandmessgerät (1) nach einem der vorhergehenden Ansprüche,
**dadurch gekennzeichnet, dass**
der Antrieb (11) elektrisch, elektromagnetisch oder pneumatisch angetrieben ist.

6. Radarfüllstandmessgerät (1) nach einem der vorhergehenden Ansprüche,
**dadurch gekennzeichnet, dass**
die Reduktionseinrichtung (15) als Diffusor ausgebildet ist.

7. Radarfüllstandmessgerät (1) nach einem der vorhergehenden Ansprüche,
**dadurch gekennzeichnet, dass**
die Reduktionseinrichtung (15) aus einem die elektromagnetischen Wellen absorbierenden Material ausgebildet ist.

8. Radarfüllstandmessgerät (1) nach einem der vorhergehenden Ansprüche,
**dadurch gekennzeichnet, dass**
der Reflektor (7) in der zweiten Position (II) in der Reduktionsvorrichtung (15) aufgenommen ist.

9. Radarfüllstandmessgerät (1) nach einem der vorhergehenden Ansprüche,
**dadurch gekennzeichnet, dass**
der Antrieb (11) geeignet ausgebildet ist, den Reflektor (7) rotatorisch zu bewegen.

10. Radarfüllstandmessgerät (1) nach einem der vorhergehenden Ansprüche,
**dadurch gekennzeichnet, dass**
der Antrieb (11) geeignet ausgebildet ist, den Reflektor (7) linear zu bewegen.

11. Radarfüllstandmessgerät (1) nach einem der vorhergehenden Ansprüche,
**dadurch gekennzeichnet, dass**
der Reflektor (7) in der ersten Position (I) im Wesentlichen senkrecht zur Abstrahlrichtung (A) und in der zweiten Position (II) im Wesentlichen parallel zur Abstrahlrichtung (A) angeordnet ist.

12. Radarfüllstandmessgerät (1) nach einem der vorhergehenden Ansprüche,
**dadurch gekennzeichnet, dass**
der Antrieb geeignet angesteuert ist, den Reflektor permanent zu bewegen.

## Claims

1. Radar-based fill level measurement device (1) having a signal generator for the purpose of generating electromagnetic waves, and an antenna (3) for the purpose of emitting the electromagnetic waves into a container (4), as well as for the purpose of receiving reflected electromagnetic waves from the container (4), having a security device (5) for the purpose of verifying the functional capability or improving the measurement quality of the radar-based fill level measurement device (1), wherein
the security device (5) has a reflector (7) and an adjusting device (9), and is suitably designed to move the reflector (7) at least between a first position (I), in which it reflects the electromagnetic waves, and a second position (II), in which it reflects the electromagnetic waves to a reduced degree, wherein
the security device (5) has a drive which acts on the adjusting device (9),
**characterized in that**
in the second position (II), a reduction device (15) is arranged in such a manner that the reflector (7) is at least partially covered as seen in the direction of the beam path (A).

2. A radar-based fill level measurement device (1) according to claim 1,
**characterized in that**
the drive (11) is connected to an electronics (13) of the radar-based fill level measurement device (1), and the reflector (7) moves from the second position (II) into the first position (I) upon request by the electronics (13).

3. A radar-based fill level measurement device (1) according to claim 1,
**characterized in that**
the drive (11) is connected to an operating unit and the reflector (7) moves from the second position (II) into the first position (I) upon request by the operating unit.

4. A radar-based fill level measurement device (1) according to one of the previous claims,
**characterized in that**
the security device (5) is designed to be spring-loaded in the first position (I).

5. A radar-based fill level measurement device (1) according to one of the previous claims,
**characterized in that**
the drive (11) is driven electrically, electromagnetically, or pneumatically.

6. A radar-based fill level measurement device (1) according to one of the previous claims,
**characterized in that**
the reduction device (15) is designed as a diffusor.

7. A radar-based fill level measurement device (1) according to one of the previous claims,
**characterized in that**
the reduction device (15) is designed out of a material which absorbs the electromagnetic waves.

8. A radar-based fill level measurement device (1) according to one of the claims one of the previous claims,
**characterized in that**
the reflector (7) in the second position (II) is accommodated in the reduction device (15).

9. A radar-based fill level measurement device (1) according to one of the previous claims,
**characterized in that**
the drive (11) is suitably designed to move the reflector (7) rotationally.

10. A radar-based fill level measurement device (1) according to one of the previous claims,
**characterized in that**
the drive (11) is suitably designed to move the reflector (7) linearly.

11. A radar-based fill level measurement device (1) according to one of the previous claims,
**characterized in that**
the reflector (7) is arranged in the first position (I) substantially perpendicular to the direction of the beam path (A), and in the second position (II) substantially parallel to the direction of the beam path (A).

12. A radar-based fill level measurement device (1) according to one of the previous claims,
**characterized in that**
the drive is suitably controlled to move the reflector permanently.

## Revendications

1. Appareil de mesure du niveau de remplissage par radar (1) avec un générateur de signal destiné à produire des ondes électromagnétiques et une antenne (3) destinée à émettre les ondes électromagnétiques dans un réservoir (4) ainsi qu'à recevoir des ondes électromagnétiques réfléchies venant du réservoir (4), avec un dispositif de sécurité (5) destiné à vérifier la capacité de fonctionnement ou à améliorer la qualité de mesure de l'appareil de mesure du niveau de remplissage par radar (1),
le dispositif de sécurité (5) comprenant un réflecteur (7) et un dispositif de réglage (9) et étant conçu de manière à déplacer le réflecteur (7) au moins entre une première position (I), dans laquelle il réfléchit les ondes électromagnétiques, et une seconde position (II), dans laquelle il réfléchit les ondes électromagnétiques de façon réduite,
le dispositif de sécurité (5) comprenant un entraînement qui agit sur le dispositif de réglage (9),
**caractérisé en ce que**
dans la seconde position (II) un dispositif de réduction (15) est placé de telle manière que le réflecteur (7) est masqué, vu en direction d'émission (A), au moins en partie.

2. Appareil de mesure du niveau de remplissage par radar (1) selon la revendication 1,
**caractérisé en ce que**
l'entraînement (11) est relié à une électronique (13) de l'appareil de mesure du niveau de remplissage par radar (1) et meut le réflecteur (7) de la seconde position (II) vers la première position (I) à la demande de l'électronique (13).

3. Appareil de mesure du niveau de remplissage par radar (1) selon la revendication 1,
**caractérisé en ce que**
l'entraînement (11) est relié à une unité de commande et meut le réflecteur (7) de la seconde position (II) vers la première position (I) à la demande de l'unité de commande.

4. Appareil de mesure du niveau de remplissage par radar (1) selon l'une des revendications précédentes,
**caractérisé en ce que**
le dispositif de sécurité (5) dans la première position (I) est rappelé élastiquement.

5. Appareil de mesure du niveau de remplissage par radar (1) selon l'une des revendications précédentes,
**caractérisé en ce que**
l'entraînement (11) est entraîné de manière électrique, électromagnétique ou pneumatique.

6. Appareil de mesure du niveau de remplissage par radar (1) selon l'une des revendications précédentes,
**caractérisé en ce que**
le dispositif de réduction (15) est un diffuseur.

7. Appareil de mesure du niveau de remplissage par radar (1) selon l'une des revendications précédentes,
**caractérisé en ce que**
le dispositif de réduction (15) est formé à partir d'un matériau qui absorbe les ondes électromagnétiques.

8. Appareil de mesure du niveau de remplissage par radar (1) selon l'une des revendications précédentes,
**caractérisé en ce que**
le réflecteur (7) dans la seconde position (II) est logé dans le dispositif de réduction (15).

9. Appareil de mesure du niveau de remplissage par radar (1) selon l'une des revendications précédentes,
**caractérisé en ce que**
l'entraînement (11) est conçu de manière à mouvoir en rotation le réflecteur (7).

10. Appareil de mesure du niveau de remplissage par radar (1) selon l'une des revendications précédentes,
**caractérisé en ce que**
l'entraînement (11) est conçu de manière à mouvoir le réflecteur (7) de façon linéaire.

11. Appareil de mesure du niveau de remplissage par radar (1) selon l'une des revendications précédentes,
**caractérisé en ce que**
le réflecteur (7) est arrangé dans la première position (I) de manière essentiellement perpendiculaire à la direction d'émission (A) et dans la seconde position (II) de manière essentiellement parallèle à la direction d'émission(A).

12. Appareil de mesure du niveau de remplissage par radar (1) selon l'une des revendications précédentes,
**caractérisé en ce que**
l'entraînement est commandé de manière à mouvoir le réflecteur de manière permanente.
